# EUROPÄISCHE PATENTSCHRIFT

(11) **EP 0 377 054 B1**
(45) Veröffentlichungstag und Bekanntmachung des Hinweises auf die Patenterteilung: **08.09.1993**
(21) Anmeldenummer: 88119067.2
(22) Anmeldetag: 17.11.1988
(51) Int. Cl.: B01D 29/11, B01D 29/54, B01D 29/64, B01D 29/70, B01D 29/82, B01D 29/86, B01D 35/16

(54) **Druckfilterapparat**
Pressure filter
Filtre à pression

(43) Veröffentlichungstag der Anmeldung: 11.07.1990
(73) Patentinhaber: HERCO-CFF ChiralFlow Filtertechnik GmbH, D-71691 Freiberg (DE)
(72) Erfinder: Kupka, Dieter, D-8852 Rain/Lech (DE)
(74) Vertreter: Körner, Ekkehard, Dipl.-Ing.

(56) Entgegenhaltungen:
- EP-A- 0 036 318
- EP-A- 0 178 389
- EP-A- 0 226 659
- FR-A- 1 033 621
- US-A- 3 497 060
- Ullmann's Encyclopedia of industrial chemistry, Vol B2,(1988), p.10-48 to 10-54

## Beschreibung

Die Erfindung bezieht sich auf einen Filter apparat.

Ein aus EP-A-0 226 659 bekanntet Filter apparat weist ein zylindrisches, mit horizontaler Achse angeordnetes Gehäuse auf, in welchem sich mehrere scheibenförmige, parallel nebeneinander angeordnete Filterelemente befinden, die an einem in dem Gehäuse angeordneten Rahmen fest abgestützt sind. Zwischen den Filterelementen befinden sich jeweils scheibenförmige Rotorelemente, die auf einer gemeinsamen Rotorwelle drehfest angebracht sind, die die Filterelemente durchsetzt. Die Rotorelemente weisen Preßplatten auf, die voneinander weg gegen auf den Filterelementen aufgebaute Filterkuchen preßbar sind, um die Filterkuchen mechanisch auszupressen. Die Rotorwelle kann axial verstellt werden, um das Abräumen der Filterkuchen von den Filterelementen unter Drehung der Rotorwelle und der mit ihnen verbundenen Rotorscheiben zu ermöglichen bzw. zu erleichtern.

Eine solcher Filterapparat kann in der Weise betrieben werden, daß während des Filtervorgangs der aus Rotorscheiben und Rotorwelle bestehende Rotor in Drehung versetzt wird, um in der zu filternden Trübe eine Strömung hervorzurufen, die quer zu den Oberflächen der Filterelemente gerichtet ist. Hierdurch wird ein vorzeitiges Zusetzen der Filtertücher, mit denen die Filterelemente bespannt sind, verhindert. Man erzielt hierdurch einen längeren, ununterbrochenen Klärfiltratdurchsatz und Filterbetrieb. Es liegt in der Natur dieser Filterpresse, daß die von den Rotorscheiben in der Trübe hervorgerufene Querströmung im achsnahen Bereich, d.h. nahe der Rotorwelle, eine geringere Geschwindigkeit aufweist, als im Umfangsbereich, d.h. nahe dem zylindrischen Gehäusemantel. Dem könnte zwar dadurch Rechnung getragen werden, daß auf den Rotorscheiben angeordnete Rippen im Bereich nahe der Rotorwelle eine andere Gestalt, insbesondere eine andere Höhe aufweisen, als nahe dem äußeren Rand der Rotorscheiben. Dann wäre aber der Raum in der Filterpresse nicht optimal ausgenutzt, und außerdem würde dies die den Rotorscheiben zugedachte Preßfunktion beeinträchtigen, da die Rippen den mechanischen Preßhub der gegen die Filterkuchen zu drückenden Oberflächen der Rotorscheiben begrenzen.

Wenn bei der bekannten Filterpresse Filtertücher gewechselt werden sollen, ist entweder die Rotorwelle zu zerlegen, oder die Filterelemente müssen so gestaltet sein, daß sie ohne Zerlegung der Rotorwelle aus dem Gehäuse entnommen werden können, d.h. sie müssen teilbar sein.

Aus EP-A-0 178 389 ist eine Kammerfilterpresse bekannt, die mehrere Kammern aufweist, die jeweils einen Hohlraum zur Trübenaufnahme (Trübenkammer) sowie einen Hohlraum zur Filtrataufnahme (Filtratkammer) auf der einen bzw. der anderen Seite eines Filtermittels umfassen und zur Entfernung des Filterkuchens vom jeweiligen Filtermittel sowie aus der jeweiligen Trübenkammer nach dem Filtern geöffnet werden können. Die Trübenkammern sind jeweils mit einem drehbaren sowie axial verschiebbaren scheibenförmigen Rotor zum Trübebewegen sowie zum rührenden und pressenden Filterkuchenkneten beim Filtern und zum Filterkuchenpressen sowie -entfernen nach dem Filtern versehen. Die Filterkuchen können mittels der Rotoren im geöffneten Zustand der Trübenkammern von den Filterflächen abgeschabt werden. Beim Auspressen der Filterkuchen wirkt auf die Rotorwelle eine axiale Kraft, die über die Rotorscheiben auf die vom Gehäuse der Filterpresse gehaltenen Filterelemente übertragen werden. Die Rotorscheiben müssen hierzu eine beachtliche Steifigkeit aufweisen, und das Gehäuse der Filterpresse muß den starken mechanischen Druckkräften widerstehen können. Dies macht die Filterpresse insgesamt schwer und teuer.

Aus der FR-A-1 033 621 ist ein Filterapparat bekannt, der in einem aufrechtstehenden, zylindrischen Behälter mehrere konzentrisch ineinandersitzende, zylindermantelförmige Filterelemente enthält. Weiterhin befindet sich in dem Behälter ein in der Behälterachse umlaufender Rotor, der Rotorelemente in Form von Zylindern aufweist, die sich in den Zwischenräumen zwischen benachbarten Filterelementen erstrecken und die Rakeln U-förmigen Querschnitts auf beiden Seiten tragen, die wendelförmig über die Zylinderflächen verlaufen. Diese Zylinder sind von Querarmen an einer hohlen Rotorwelle gehalten, durch die sich konzentrisch eine zweite Welle erstreckt, die an ihrem unteren Ende dicht über dem Boden des Behälters Schaber trägt. Im Betrieb dieses Filterapparats bauen sich auf den Filterelementen Filterkuchen auf, die, wenn sie eine gewisse Dicke erreichen, von den genannten Rakeln abgetragen und gegen den Boden des Behälters gefördert werden, wo sie von den Schabern in einen Auslaß geworfen werden können. Ein Auspressen der Filterkuchen und ein vollständigens Abräumen derselben von den Filterelementen ist mit diesen Instrumenten nicht möglich.

Aus der EP-A-0 036 318 ist ein Druckfilterapparat bekannt, der in einer zylindrischen Kammer eine zylindrische Filterkerze enthält, die mit radialem Abstand von einer zylindrischen, gummielastischen Membran umgeben ist. Im Filterbetrieb wird in den von der Filterkerze und der Membran begrenzten Ringraum die Trübe eingeleitet, die ihre Flüssigkeit in das Innere der Filterkerze abgibt, sodaß sich die Feststoffe darauf absetzen. Wenn sich ein Filterkuchen vorbestimmter Dicke auf der Filterkerze aufgebaut hat, wird die Membran von außen von einem in die Kammer eingeleiteten hydraulischen Druckfluid beaufschlagt, sodaß sie gegen den Filterkuchen gepreßt wird und diesen entwässert. Im Anschluß daran kann die Filterkerze aus dem Filterapparat in axialer Richtung herausgenommen werden, um den ausgepreßten Filterkuchen von ihrer Oberfläche zu entfernen.

Der Erfindung liegt die Aufgabe zugrunde, einen neuen Filterapparat anzugeben, der mit Auspressung des Filter kuchens arbeitet und einen einfachen Austausch der Filterelemente zuläßt, insbesondere ein einfaches Auswechseln der Filtertücher an denselben.

Diese Aufgabe wird durch die im Anspruch 1 angegebene Erfindung gelöst. Vorteilhafte Ausgestaltungen der Erfindung, die weitere Vorteile im Betrieb des Filterapparats mit sich bringen, sind Gegenstand der abhängigen Ansprüche.

Die Erfindung löst sich völlig von der in der Technik der Filterapparate, die mit Einrichtungen zum mechanischen Auspressen der Filterkuchen versehen sind, verwendeten Technik, wo scheiben- oder plattenförmige Filterelemente und entsprechende plattenförmige Rotor- und Preßelemente eingesetzt wurden, und verwendet stattdessen zylindrische Filterelemente, genauer gesagt zylindermantelförmige Filterelemente, die unterschiedliche Durchmesser aufweisen und konzentrisch ineinander angeordnet sind. Die Rotorelemente, die zwischen den Filterelementen angeordnet sind, bestehen demzufolge aus zylindermantelförmigen Elementen, die an einer gemeinsamen Querträgeranordnung befestigt sind und in die Zwischenräume zwischen den auf einem gemeinsamen Trägerrost abgestützten und befestigten Filterelementen eintauchen. Es wird dadurch möglich, die Konstruktion so einzurichten, daß der Rotor und die Filterelemente relativ zueinander in axialer Richtung auseinandergefahren werden können, um die Filterelemente - und auch die Rotorelemente - für die Wartung unbehindert zugänglich zu machen.

Die Erfindung ermöglicht weiterhin eine modulare Bauweise von Filterpressen unterschiedlicher Größen durch unterschiedliche Durchmessergestaltung, wobei für Filterpressen größerer Durchmesser als die inneren Filterelemente und Rotorelemente solche von Pressen kleineren Durchmessers eingesetzt werden können.

Ein weiterer beachtlicher Vorteil der Erfindung besteht darin, daß eine Querströmung in der Trübe nicht nur durch die zwischen den Filterelementen eingetauchten Rotorelemente hervorgerufen werden kann, sondern gemäß einer Weiterbildung auch durch einer stirnseitig vor der vorgenannten Anordnung im Gehäuse vorgesehenen Rührer, der außerdem am Ende des Filtervorgangs das Ausräumen der Filterkuchen aus dem Gehäuse übernehmen kann, die von den Filterelementen abgeworfen werden.

Um dieses Abwerfen und Ausräumen der Filterkuchen zu ermöglichen, ist die Behälterachse senkrecht angeordnet, sodaß die Filterkuchen, die durch Drehung des Rotors von den Filterelementen abgeräumt werden, unbehindert nach unten und durch die Öffnungen im Tragrost hindurch fallen können.

Zwar ist auch bei der erfindungsgemäßen Filterpresse naturgemäß die Umlaufgeschwindigkeit des Rotors nahe seiner Achse geringer als nahe dem zylindrischen Behältermantel, d.h. die Relativgeschwindigkeit zwischen Rotorelement und Filterelement ist an den Filterelementen kleinen Durchmessers geringer als an den Filterelementen großen Durchmessers, doch kann diesem Unterschied ohne Beeinträchtigung der Funktion der Filterpresse in optimaler Weise dadurch Rechnung getragen werden, daß die Gestalt der Rotorelemente, insbesondere durch entsprechende Anpassung daran ausgebildeter, radial vorstehender Rippen, den unterschiedlichen Umlaufradien angepaßt wird. Diese Anpassung ist dann über die gesamte axiale Länge des betreffenden Rotorelementes gleichbleibend, sodaß sich optimale Verhältnisse hinsichtlich Raumausnutzung und erzeugter Querströmung ohne Eingehung von Kompromissen erzielen lassen.

Weitere Vorteile und Einzelheiten der Erfindung werden nachfolgend unter Bezugnahme auf in den Zeichnungen dargestellte Ausführungsbeispiele näher erläutert. Es zeigt:
- Fig. 1: in Seitenansicht, teilweise geschnitten, eine erste Ausführungsform der Erfindung in zwei verschiedenen Varianten, und zwar links mit einem relativ weit heruntergezogenen unteren Boden und rechts mit einem relativ schwach gewölbten unteren Boden des Behälters;
- Fig. 2: eine Einzelheit aus Fig. 1 in vergrößerter Darstellung in zwei verschiedenen Betriebsstellungen, links in zurückgezogener Stellung des Querträgers und rechts in vorgeschobener Stellung des Querträgers, zugleich zwei verschiedene Ausführungsformen von Filterelementfüßen zeigend;
- Fig 3: als Ausschnittsdarstellung einen Radialschnitt III-III in Fig.4 durch Filterelemente und ein Rotorelement;
- Fig 4: eine alternative Ausführungsform eines Rotorelements in zwei verschiedenen Betriebsstellungen, und zwar links in zurückgezogener Betriebsstellung und rechts in vorgeschobener Betriebsstellung, geschnitten längs IV-IV in Fig. 3;
- Fig 5: als Ausschnittsdarstellung eine Seitenansicht eines Filterelements, teilweise im Schnitt;
- Fig 6: eine Axialschnittdarstellung einer Filterpresse ähnlich Fig. 1 mit drehbaren Filterelementen;
- Fig 7: einen Radialschnitt durch die Filterpresse nach Fig. 6;
- Fig 8: einen Ausschnitt aus einer Filterpresse mit heb-und senkbarem Trägerrost für die darauf befindlichen Filterelemente;
- Fig 9: eine vollständige Darstellung einer Filterpresse mit heb- und senkbarem Trägerrost im Axialschnitt, und
- Fig 10: einen Ausschnitt aus einer vereinfachten Ausführungsform der Erfindung, bei der zwischen den Filterelementen angeordnete aufblähbare Preßkörper zum mechanischen Auspressen der auf den Filterelementen ausgebildeten Filterkuchen nur heb- und senkbar, nicht jedoch drehbar ist.

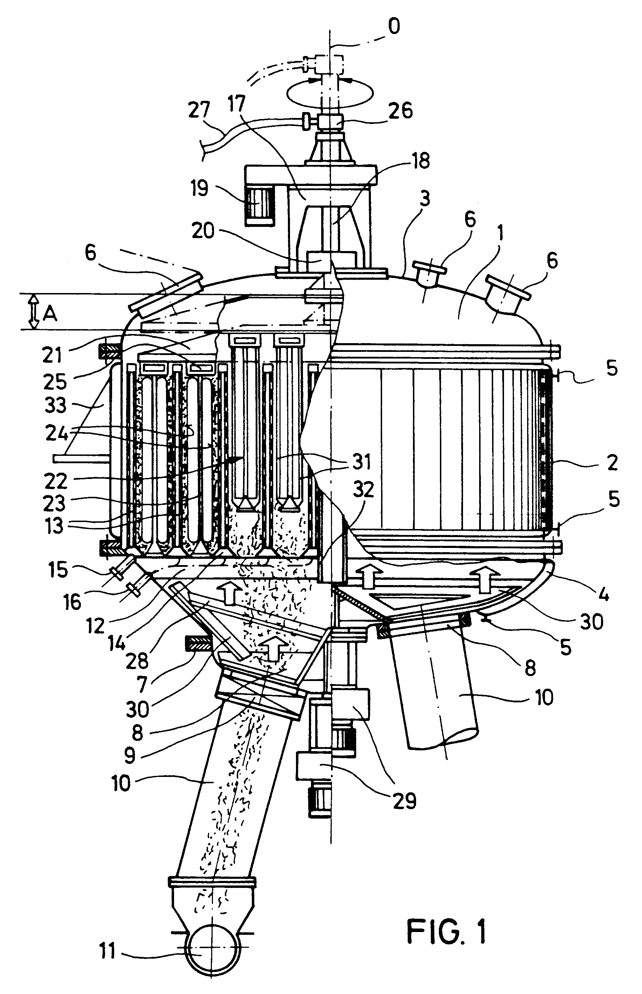

In Fig. 1 erkennt man eine Filterpresse gemäß der vorliegenden Erfindung, umfassend einen Druckbehälter 1 von im wesentlichen zylindrischer Gestalt, der mit vertikaler Achse 0 angeordnet ist. Der Druckbehälter 1 hat eine zylindrische Mantelwand 2, die doppelwandig ausgebildet sein kann, um durch ein Temperiermedium, insbesondere ein Heizmedium durchströmt zu werden. Ein solches Medium kann Thermoeffekte für die Trocknung oder Verdampfung des Behälterinhalts bewirken.

An die zylindrische Mantelwand 2 sind oben und unten Stirnwände 3 und 4 angeflanscht. Von diesen kann die untere Stirnwand 4 ebenfalls doppelwandig ausgeführt sein, um ein Temperiermedium aufzunehmen. Die Anschlüsse 5 für ein solches Temperiermedium sind in Fig 1 nur andeutungsweise dargestellt. An der oberen Stirnwand sind mehrere Anschlußstutzen 6 befestigt, die Zugang in den Innenraum des Behälters gewähren. Durch diese Anschlußstutzen kann der Behälter mit Trübe befüllt und ggf. mit einer Waschflüssigkeit oder mit Preßgas beaufschlagt werden. Aus diesem Grunde sind die Abmessungen der Anschlußstutzen 6 mit unterschiedlichen Größen dargestellt.

Die untere Behälterstirnwand 4 ist in Fig. 1 in zwei verschiedenen Ausführungsarten dargestellt. In der linken Hälfte der Fig. 1 ist die untere Stirnwand 4 etwa trichterförmig herabgezogen und weist im Bereich ihrer tiefsten Stelle einen Auslaßanschluß 7 mit einer Auslaßöffnung 8 auf, die mittels eines Absperrschiebers 9 verschließbar ist. An den Absperrschieber 9 schließt sich ein Auslaßrohr 10 an, das zum Einlaß eines Schneckenförderers 11 führt.

In der rechten Hälfte ist die untere Behälterstirnwand 4 relativ flach ausgebildet dargestellt, sie weist dort ebenfalls eine Auslaßöffnung 8 auf, an die sich ein Auslaßrohr 10 anschließt.

In dem Druckbehälter 1 befindet sich im unteren Abschnitt, unterhalb des zylindrischen Gehäusemantels 2 ein Tragrost 12, der im Behälter an dessen Wandkonstruktion abgestützt ist und sich quer durch den Behälter 1 erstreckt. Dieser Tragrost 12 trägt mehrere zylindermantelförmige Filterelemente 13, die an dem Tragrost 12 befestigt sind und konzentrisch zueinander und zur Behälterachse 0 angeordnet sind. Im dargestellten Beispiel sind fünf solcher zylindermantelförmiger Filterelemente 13 zu erkennen. Sie weisen an ihren unteren Enden hohle, ringförmige Füße 14 auf, die mit den Filtratkammern, die im Innern der Filterelemente ausgebildet sind, verbunden sind und außerdem mit wenigstens einer hohl ausgebildeten der Streben des Tragrostes 12 verbunden sind. Dabei können unterschiedliche Filtratkammern 37 mit unterschiedlichen Streben des Tragrostes 12 verbunden sein, die zu verschiedenen Auslaßanschlüssen 15 und 16 außen am Behälter 1 führen.

Auf der oberen Behälterstirnwand 3 ist ein Lagergestell 17 befestigt, in welchem eine Hohlwelle 18 drehbar gelagert ist, die von einem an dem Lagergestell 17 befestigten Elektromotor 19 antreibbar ist und die obere Behälterstirnwand durchdringt, wo sie von einer Dichtungsanordnung 20 abgedichtet ist. An der Welle 18 ist im Behälter 1 eine Querträgeranordnung 21 im Bereich oberhalb der zylindrischen Wand 2 befestigt. Die Querträgeranordnung besteht vorzugsweise aus mehreren, in gleichen Winkelabständen sich radial von der Hohlwelle 18 erstreckenden Querträgern. An diesen sind zylindermantelförmige Rotorelemente 22 befestigt, die jeweils zwischen zwei benachbarten Filterelementen 13 angeordnet sind. Im vorliegenden Falle sind daher vier solcher Rotorelemente 22 vorgesehen.

Die Rotorelemente 22 bestehen aus einer zylindermantelförmigen Trägerplatte 23 und zwei zu beiden Seiten derselben angeordneten Preßmembranen 24. Der von den Preßmembranen eingeschlossene Hohlraum steht über einen Durchlaß 25 mit dem Innenraum eines hohl ausgebildeten Querträgers der Querträgeranordnung 21 in Verbindung. Dieser Querträgerhohlraum ist mit dem Innenraum der Hohlwelle 18 verbunden, der über einen Dichtkopf 26 mit einer Anschlußleitung 27 zur Zuführung eines Druckfluides in die von den Preßmembranen 24 umschlossenen Hohlräume, beispielsweise Preßluft, verbunden ist.

Im dargestellten Beispiel ist die Hohlwelle 18 gegenüber dem Behälter 1 axial verschiebbar, wobei die untere Stellung in durchgezogenen Linien dargestellt ist, während die obere Stellung gestrichelt dargestellt ist. Es ist daher möglich, im Druckbehälter 1 die Rotorelemente 22 gegenüber den Filterelementen 13 in axialer Stellung zu verschieben. In der Zeichnung sind die beiden radial außenliegenden Rotorelemente 22 in der vorgeschobenen, abgesenkten Stellung dargestellt, während die beiden radial innenliegenden Rotorelemente 22 in der zurückgezogenen oder angehobenen Stellung dargestellt sind.

In dem Behälterteilraum, der von dem Tragrost 12 und der unteren Behälterstirnwand 4 begrenzt wird, befindet sich ein Rührer 28, der von einem Antriebsmotor 29 antreibbar ist, der im Zentrum der unteren Gehäusestirnwand 4 an dieser angeflanscht ist. Der Rührer 28 weist wenigstens einen Rührflügel 30 auf, der sich bis dicht an die Innenseite der unteren Behälterstirnwand erstreckt. Dieser Rührer 28 ist in der Lage, in dem Druckbehälter 1 von unten her eine Strömung zu erzeugen, die quer zu den von den Filterelementen 13 definierten Filterflächen gerichtet ist, um ein vorzeitiges Zusetzen derselben zu verhindern.

Man erkennt in Fig. 1 fernerhin an den beiden radial innenliegenden Rotorelementen Abstreifer 31, die den benachbarten Filterelementen 13 in engem Abstand gegenüberstehen und sich in axialer Richtung von der Querträgeranordnung 21 bis zu den Füßen 44 der Rotorelemente erstrecken. Diese Abstreifer verhindern bei Umlauf der Querträgeranordnung 21 um die Behälterachse ein zu starkes Anbacken von Filterkuchen auf den Filterelementen 13 und dienen später, wie noch beschrieben wird, dem Abräumen von Filterkuchen von den Filterelementen. In dem Behälter 1 befindet sich weiterhin ein Zentralrohr 32, das das Zentrum des Behälters 1 ausfüllt, wo keine wesentliche Trübenströmung erzeugt werden kann. Dieses Zentralrohr 32 ist an dem Tragrost 12 befestigt und kann auch dazu dienen, die Hohlwelle 18 und die Welle des Rührers 28 zu führen.

Es ist zweckmäßig, wenn der zylindrische Behältermantel 2 gesondert von den Stirnwänden 3 und 4 abgestützt ist, damit die Stirnwände in einfacher Weise abgeflanscht werden können. Man erkennt in Fig. 1 links eine entsprechende Tragkonsole 33 zur Abstützung der zylindrischen Gehäusewand 2.

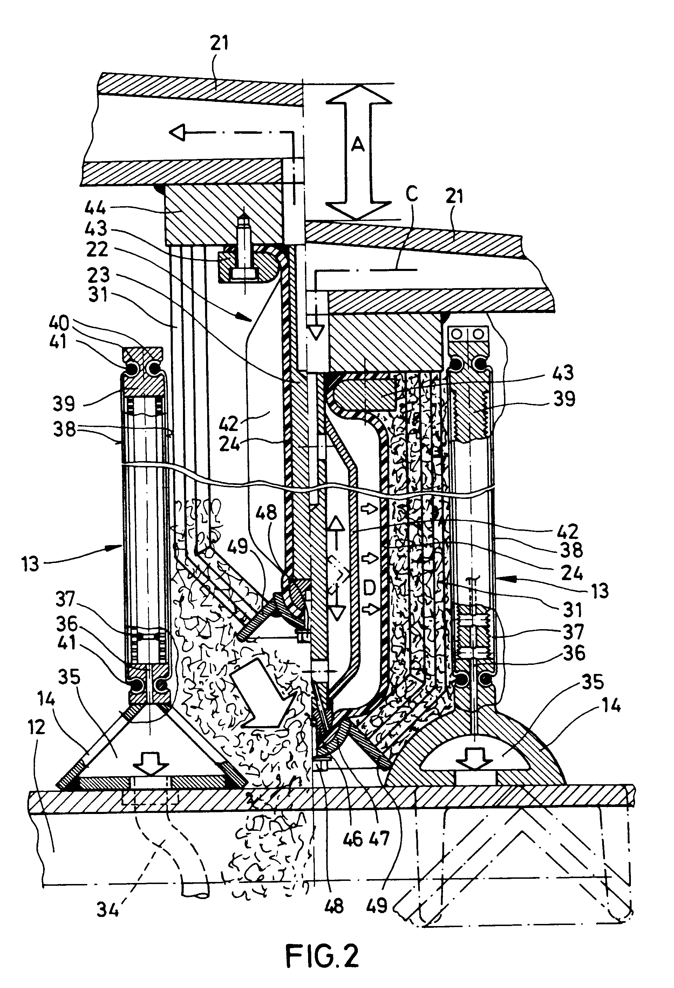

Fig. 2 zeigt als Teildarstellung in vergrößertem Maßstab im Schnitt einen Ausschnitt aus Fig. 1. Man erkennt in Fig. 2 eine Strebe des Tragrostes 12, auf der Filterelemente 13 befestigt sind. Die Filterelemente 13 haben einen hohl ausgebildeten, ringförmigen Fuß 14, von dem in Fig. 2 zwei mögliche Ausführungsformen dargestellt sind. Links in Fig. 2 hat der Fuß 14 einen dreieckigen Querschnitt, während rechts eine Ausführungsform dargestellt ist, in der der Fuß einen etwa halbkreisförmigen Querschnitt hat. In beiden Fällen ist der Fuß 14 hohl und mit einer Abflußleitung 34 verbunden, die auch von dem Innenraum einer Strebe des Tragrostes 12 gebildet sein kann, sofern diese hohl ausgeführt ist. Der von jedem Fuß 14 umschlossene Hohlraum 35 ist über einen Kanal 36 mit der Filtratkammer 37 verbunden, die an jedem Filterelement 13 hinter Filtertüchern 38 ausgebildet ist. Jedes Filterelement 13 hat einen Trägerkörper 39 zylindermantelförmiger Gestalt, der an den axialen Enden beidseitig innen und außen Nuten 40 aufweist, in denen mittels elastischer O-Ringe 41 die Filtertücher 38 festgeklemmt sind.

Wie später noch gezeigt wird, kann jedes Filterelement aus mehreren, die Teile eines Zylindermantels darstellenden Segmenten zusammengesetzt sein, die in Umfangsrichtung miteinander verbunden sind.

Zwischen jeweils zwei benachbarten, d.h. konzentrisch ineinandersitzenden Filterelementen 13 befindet sich ein Rotorelement 22, das an der Querträgeranordnung 21 befestigt ist. Dieses Rotorelement 21 besteht aus einem zylindermantelförmigen Trägerelement 23, an welchem beidseitig jeweils wenigstens eine, vorzugsweise aber mehrere radial vorstehende und sich in axialer Richtung erstreckende Rippen 42 erstrecken. Diese Rippen 42 sind zur Erzeugung einer Querströmung beim Umlauf des Rotors bestimmt. Auf jeder Seite, d.h. radial innen und außen von dem Trägerelement 23 ist dieses von einer Membran 24 aus gummielastischem Material überdeckt. Die Membran 24 ist auf der der Querträgeranordnung zugewandten Seite mittels eines Klemmringes 43 an einem ringförmigen Fuß 44 befestigt. Am in axialer Richtung anderen Ende ist jede Membran an einem ringförmigen Kopf 46 befestigt, und zwar mit Hilfe eines Ringelements 47, das an dem Kopf 46 mittels Schraubbolzen 48 verspannt ist. Das Ringelement 47 weist quer wegstehende Ringe 49 auf, deren Funktion nachfolgend noch erläutert wird.

An dem Fuß 44 und an dem Kopfring 49 ist wenigstens ein Abstreifer 31, vorzugsweise aber sind mehrere Abstreifer 31 befestigt, die den jeweils benachbarten Filterelementen 13 in engem Abstand gegenüberstehen.

Wie Fig. 2 zeigt, ist die Querträgeranordnung 21 zusammen mit dem daran befestigen Rotorelement 22 und dem Abstreifer 31 in axialer Richtung zwischen zwei Endstellungen gegenüber dem Tragrost 12 und den darauf befindlichen Filterelementen 13 verstellbar, wobei die Verstelldistanz in den Figuren 1 und 2 mit dem Doppelpfeil A bezeichnet ist. In der zurückgezogenen, oberen Stellung befindet sich zwischen den Fußringen 49 und den Füßen 14 der Filterelemente ein Zwischenraum, durch den Filterkuchen durch den Tragrost 12 abgefördert werden kann, wie der Pfeil B in Fig. 2 zeigt. In der vorgeschobenen oder abgesenkten Stellung, die in Fig. 2 rechts dargestellt ist, sind die Kopfringe 49 der Rotorelemente - dann im Stillstand - mit den Füßen 14 der Filterelemente 13 in Berührung, gleichzeitig steht die radial freie Kante eines jeden Fußes 44 dem oberen Ende des benachbarten Filterelements 13 in engem Abstand gegenüber. Der Zwischenraum zwischen dem Rotorelement 22 und iedem benachbarten Filterelement 13 ist daher durch den Fuß 44 und den Kopfring 49 beinahe vollständig abgeschlossen. In diesem Zustand, der in Fig. 2 rechts dargestellt ist, kann in den von den Membranen 24 abgeschlossenen Hohlraum durch einen Tragarm der Querträgeranordnung 21 hindurch ein Druckfluid zugeführt werden, was in Fig. 2 mit dem Pfeil C dargestellt ist, sodaß die Membranen 24 gegen die benachbarten Filterelemente 13 vorgewölbt werden und die dort befindlichen Filterkuchen ausdrücken, was in Fig. 2 rechts mit D dargestellt ist. Die Abdichtung des Trübenraumes durch den Kopfring 49 und den Fuß 44 verhindert, daß Filterkuchen F entweichen kann. Der Filterkuchen wird auf diese Weise mechanisch ausgepreßt. Da zu beiden Seiten eines jeden Filterelements 13 solche von den Membranen 24 gebildeten Preßpolster vorhanden sind, ist die Gesamtanordnung mechanisch ausgeglichen. Die Kopfringe 49 zusammen mit den Ringfüßen 14 der Filterelemente 13 und die Füße 44 stützen fernerhin die Membranen 24 im aufgeblähten Zustand derselben ab, um eine Beschädigung derselben zu verhindern.

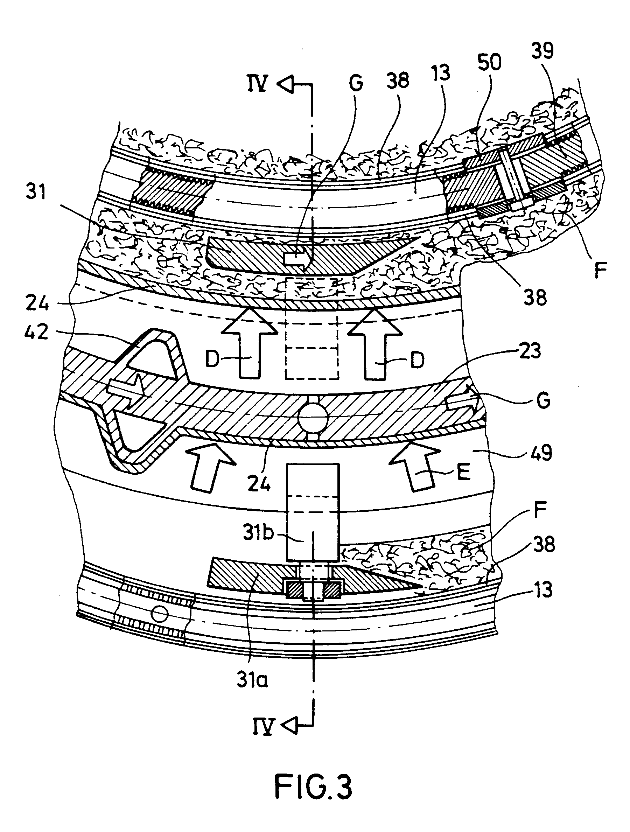

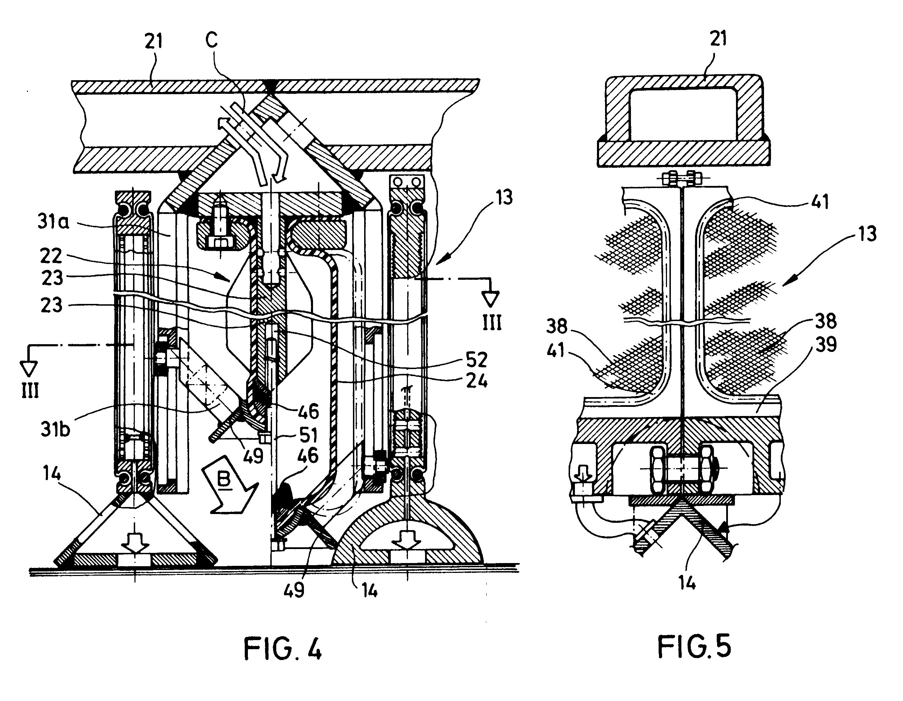

Fig. 3 zeigt die Anordnung nach Fig. 2 im Schnitt längs der Linie III-III von Fig. 4. Man erkennt dort einerseits im oberen Bereich die in Pfeilrichtung D aufgrund Druckzuführung ausgedehnte, gegen Filterkuchen F gedrückte Preßmembran 24, während in der unteren Hälfte der Fig. 3 die Preßmembran 24 aufgrund Unterdruckzuführung in den von ihr begrenzten Hohlraum in Pfeilrichtung E an den Trägerkörper 23 angezogen ist, wobei sie sich an die Rippe(n) 42 anlegt. Der Abstreifer 13 ist dann in der Lage, bei Bewegung in Pfeilrichtung G den Filterkuchen F vom Filtertuch 38 abzuräumen. Es versteht sich, daß die in Fig. 3 dargestellten Zustände der Preßmembranen 24 nicht gleichzeitig auftreten können. Die unterschiedlichen Stellungen derselben sind in der Zeichnung nur beispielhaft zur Erläuterung der unterschiedlichen Situationen dargestellt.

Fig. 3 zeigt auch, daß und wie die Filterelemente aus mehreren Segmenten zusammengesetzt sein können, die zusammen einen vollständigen Kreis bilden. Man erkennt in Fig. 3 oben diesbezüglich Befestigungsflansche 50, mit deren Hilfe benachbarte Filterelementsegmente zusammengehalten sind.

Zeigten die Figuren 1 und 2 eine Ausführungsform der Erfindung, bei der die Querträgeranordnung 21 mitsamt den daran befestigten Rotorelementen durch axiale Verstellung der Rotorwelle 18 gegenüber den Filterelementen 13 verstellbar ist, so zeigt Fig. 4 eine Ausführungsart, bei der die Rotorelemente teleskopisch bei axial festgehaltener Querträgeranordnung ausfahrbar sind, um die Kopfringe 49 in Anlage an die Füße 14 der Filterelemente zu bringen. Zu diesem Zweck ist der ringförmige Kopf jedes Rotorelements 22 an mehreren Stäben oder auch an einem Zylinder 51 in einer entsprechenden Ausnehmung 52 geführt, die in dem Trägerkörper 23 des Rotorelements 22 in axialer Richtung ausgebildet ist. Durch Druckfluidzuführung (Pfeil C) in den von den Membranen 24 umschlossenen Hohlraum wird der Kopf 46 aus der in Fig. 4 links dargestellten, zurückgezogenen Stellung in die in Fig. 4 rechts dargestellte Stellung vorgeschoben, in der der Ring 49 an dem Fuß 14 anliegt.

Bei diesem Beispiel besteht der Abstreifer aus einem an der Querträgeranordnung 21 befestigten oberen Abstreiferabschnitt 31a und einem daran in axialer Richtung verschiebbar geführten Abstreiferabschnitt 31b, der an dem Kopfring 49 des Rotorelement Kopfes 46 befestigt ist. Die übrigen Elemente nach Fig. 4 entsprechen denen nach Fig. 2, sodaß auf eine weitergehende Erläuterung verzichtet werden kann.

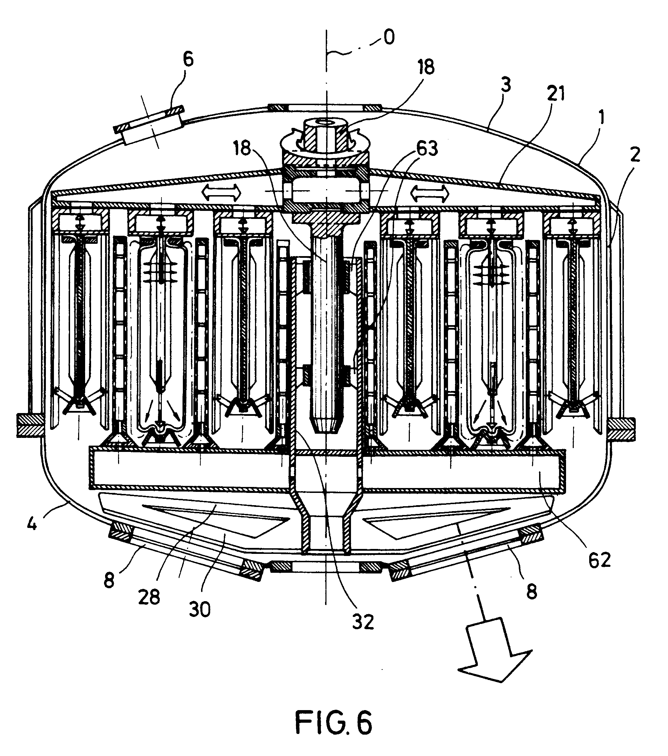

Fig. 5 zeigt in Seitenansicht und als Ausschnitt zwei aneinanderstoßende Filterelemente 13, die in Umfangsrichtung miteinander durch Schraubbolzen verbunden sind. Man sieht dort ferner die Befestigung der Filtertücher 38 auf den Trägerkörpern 39 der Filterelemente 13 mittels O-Ringen 41, die in Nuten angeordnet sind.

Es sei erwähnt, daß der Raum zwischen der Querträgeranordnung 21 under der oberen Behälterstirnwand 3 ggf. so groß sein kann, daß die Rotorelemente 22 in axialer Richtung vollständig oder nahezu vollständig von den Filterelementen 13 zurückgezogen werden können. Der Grund hierfür ist folgender. Wenn am Ende eines Filtrationszyklus mit Hilfe der Preßmembranen 24 die auf den Filterelementen 13 aufgebauten Filterkuchen mechanisch ausgepreßt werden, dann werden, wie Fig. 3 oben zeigt, die Abstreifer 31 in den Filterkuchen F möglicherweise so festgebacken, daß beim anschließenden Anfahren des Rotors an der Rotorwelle 18 ein übergroßes Drehmoment erforderlich wird, um die Abstreifer 31 in Drehrichtung zu bewegen. Hierdurch kann u.U. die ganze Filterpresse Schaden nehmen. Es ist jedoch in diesem Falle viel leichter, die Abstreifer 31 in axialer Richtung aus den Filterkuchen F herauszuziehen. Die Arbeitsweise vollzieht sich dann derart, daß der Rotor, d.h. die Rotorwelle 18 mitsamt den daran befestigten Elementen in axialer Richtung nach oben bewegt wird, sodaß die Querträgeranordnung 21 in den freien Raum über den Filterelementen 13 und der oberen Behälterstirnwand 3 gehoben wird, wodurch die Abstreifer 31 in axialer Richtung aus den Filterkuchen F herausgezogen werden. Anschließend wird der Rotor wieder in Drehung versetzt und gleichzeitig langsam wieder abgesenkt, sodaß nun die Abstreifer 31 nach und nach die Filterkuchen F von den Filterelementen 12 abschälen, ohne daß dabei ein zu großes Drehmoment an der Rotorwelle 18 auftreten kann.

Als Übersichtsdarstellung zeigt Fig. 6 im Axialschnitt eine vollständige Filterpresse mit im dargestellten Beispiel drei Filterelementen und drei Rotorelementen, die zwischen die Filterelemente 13 bzw. zwischen das äußerste Filterelement 13 und die zylindrische Mantelwand 2 des Behälters 1 eingetaucht sind. Die Rotorelemente 22 sind bei dieser Filterpresse nach Art der Fig. 4 ausgeführt, man erkennt zwei von ihnen, nämlich die innersten und äußersten im zurückgezogenen Zustand, während das mittlere Rotorelement 22 im ausgefahrenen Zustand dargestellt ist.

Diese Ausführungsform der Erfindung zeichnet sich gegenüber den vorangehend beschriebenen dadurch aus, daß der Tragrost 12 an einer Welle 61 befestigt ist, die in dem Behälter 1, die untere Behälterstirnwand 4 durchdringend und an dieser abgedichtet, drehbar gelagert ist. Diese Welle 61 ist wenigstens in ihrem unteren Abschnitt hohl ausgeführt, und von dem Tragrost 12 ist wenigstens eine Strebe 62 hohl ausgebildet, und deren Innenraum verbindet die Filtratkammmern 37 der auf dem Tragrost 12 befestigten Filterelemente 13 mit dem hohlen Abschnitt der Welle 61.

Die Welle 61 ist mit einem eigenen, hier nicht dargestellten Antriebsmotor verbunden und somit unabhängig von der Rotorwelle 18 antreibbar. Sie dient zugleich als Abfluß für das in den Filtratkammern 37 aufgefangene Filtrat.

Bei dieser Filterpresse können der Rotor mit den daran ausgebildeten Rippen, Abstreifern und Preßmembranenen und die Filterelemente 13 in zueinander gegenläufige Umlaufbewegungen versetzt werden, sodaß zur Erzielung einer vorgegebenen Querstromgeschwindigkeit der Trübe relativ zu den Filterelementen 13 nur etwa halb so große Drehgeschwindigkeiten an den beiden Wellen erzeugt werden müssen, im Vergleich zu den vorangehend beschriebenen Ausführungsformen.

Bei dieser Filterpresse ist das Stützrohr 32 mit der zweiten Welle 61 fest verbunden, ist gleichsam Teil dieser Welle, und in ihm können, wie Fig. 6 zeigt, Führungseinrichtungen 63 ausgebildet sein, die die teleskopartig darin eingetauchte Rotorwelle 18 konzentrisch führen.

Fernerhin kann an der zweiten Welle 61 unterhalb des Tragrostes 12 ein Rührer 28, vergleichbar dem Rührer 28 nach Fig. 1 befestigt sein, mit dessen Hilfe das von den Filterelementen 13 mittels der Abstreifer 31 abgeschälte Filterkuchen aus dem Behälter durch eine in der unteren Behälterstirnwand 4 ausgebildete Auslaßöffnung ausgeräumt werden kann.

Die Welle 61 kann ggf. axial verschiebbar in der unteren Behälterstirnwand geführt sein, um damit dieselben Wirkungen hervorzurufen, wie mit der schon beschriebenen Verschiebbarkeit der Rotorwelle, oder um deren Wirkung zu unterstützen.

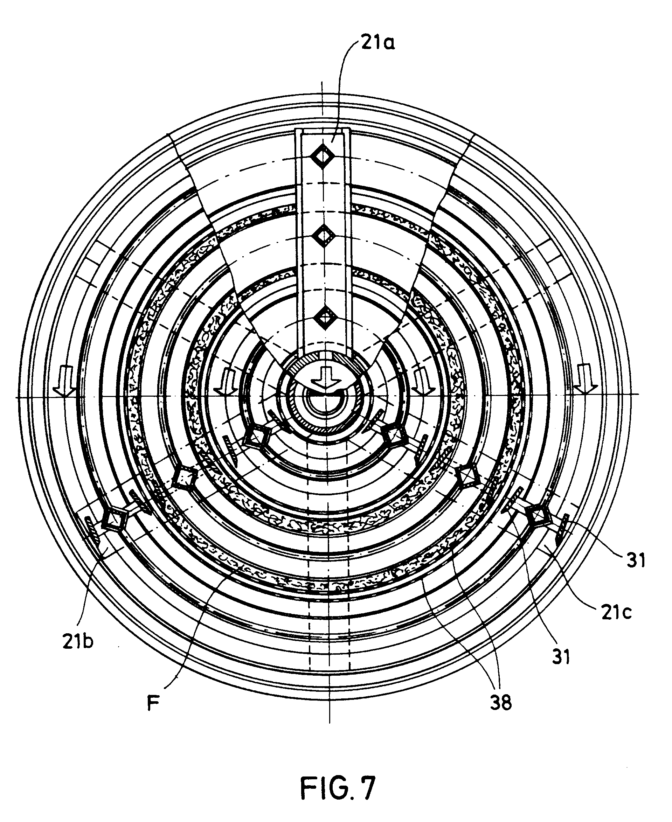

Fig. 7 zeigt einen Radialschnitt durch die Filterpresse nach Fig. 6. Man erkennt in dieser Figur eine Querträgeranordnung mit drei Querträgern 21a, 21b und 21c, an denen auch Abstreifer 31 befestigt sind, von denen jeweils drei einem jedem Filtertuch 38 bzw. der Umfangswand 2 des Behälters 1 zugeordnet sind. Gestrichelt sind in Fig. 7 auch drei Streben eines Trägerrostes dargestellt, der die Filterelemente abstützt, von denen in Fig. 7 nur die Filtertücher 38 dargestellt sind.

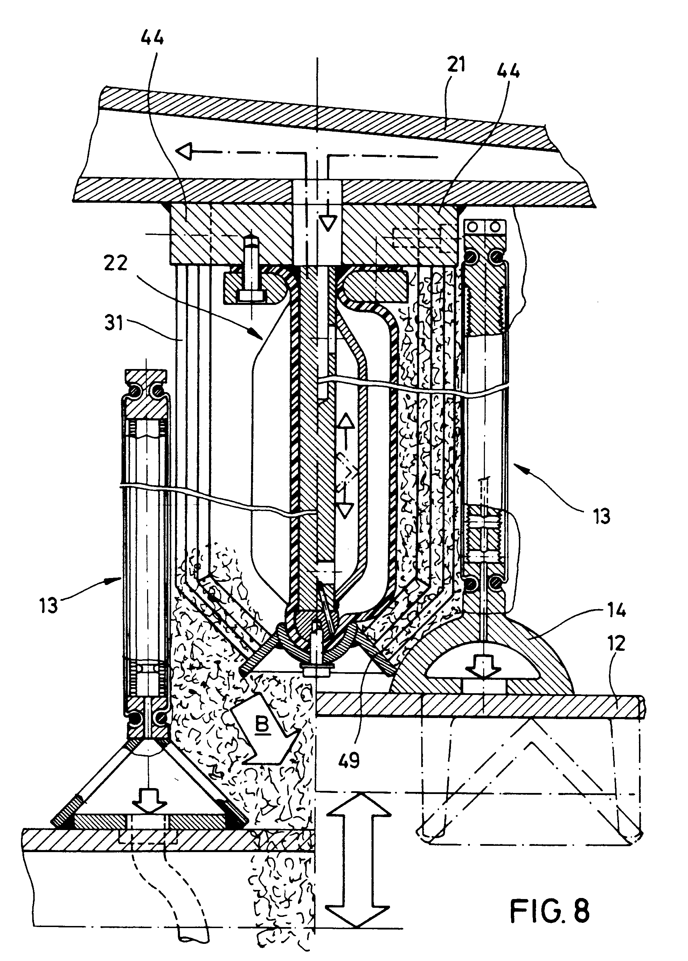

Fig. 8 zeigt eine alternative Ausführungsform der Erfindung, bei der die Relativbewegung zwischen den unteren Enden, d.h. den Köpfen der Rotorelemente 22 und den Füßen der Filterelemente 13 nicht durch Bewegung der Rotorelemente, sondern durch axiale Verstellung des Tragrostes 12 mit den darauf befindlichen Filterelementen 13 hervorgerufen wird. Die linke Hälfte von Fig. 8 zeigt die Anordnung in zurückgezogenem Zustand des Tragrostes 12, in welchem ein Zwischenraum zum Abräumen der Filterkuchen in Richtung des Pfeiles B verbleibt, während die rechte Hälfte von Fig. 8 den Tragrost 12 mit den darauf befindlichen Filterelementen in vorgeschobenem, angehobenem Zustand zeigt, in welchem der genannte Zwischenraum zwischen dem Kopfring 49 des Rotorelements 22 und dem Fuß 14 des zugehörigen Filterelements 13 verschlossen ist, während gleichzeitig der Fuß 44 dem oberen Ende des Filterelements 13 benachbart ist, um dort den Trübenraum vergleichbar dem in Fig. 2 rechts dargestellten Zustand annähernd abzuschließen. Im übrigen kann zur Erläuterung der Funktion, die durch die gegenseitigen Stellungsverhältnisse erzielbar ist, auf die Beschreibung zur Fig. 2 Bezug genommen werden.

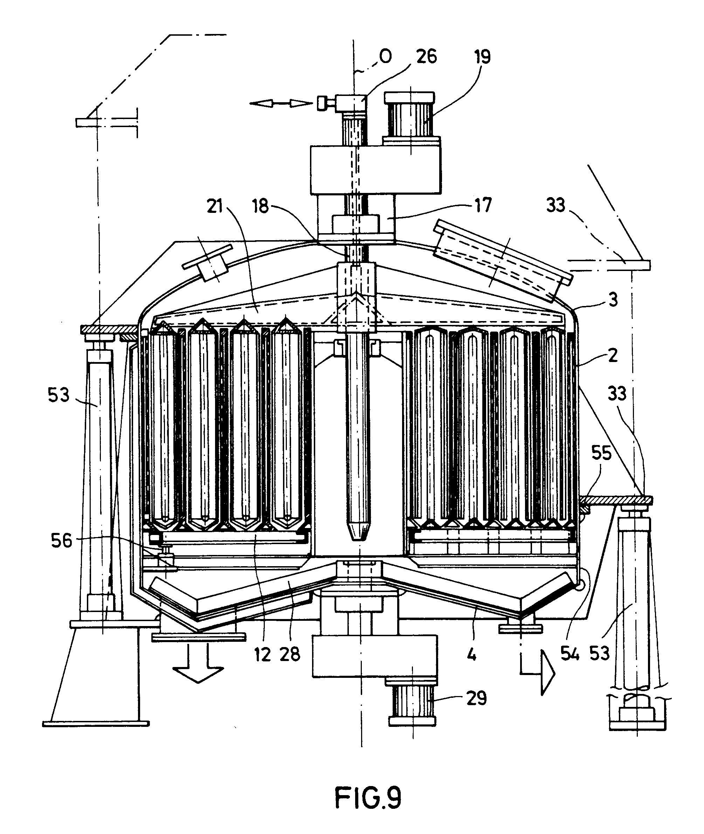

Die Fig. 9 zeigt eine Ausführungsform der Erfindung, bei der die zylindrische Behälterwand 1 zusammen mit der oberen Behälterstirnwand 3 und dem darauf befindlichen Lagergestell 17 mit Elektromotor 19 und Rotorwelle 18 mit daran befestigter Querträgeranordnung 21 mittels hydraulischer Hubzylinder 53 vollständig vom Behälterunterteil 54 abgehoben werden kann, an welchem das aus der zylindrischen Wand 2 und der oberen Gehäusewand 3 bestehende Gehäuseoberteil durch lösbare Flanschschnellverbindungen befestigt ist. Die abgehobene Stellung ist in Fig. 9 mit gestrichelten Linien dargestellt. Bei dieser Ausführungsform sind die Filterelemente und die Rotorelemente sehr leicht zugänglich. Außerdem zeigt die Fig. 9, daß der Tragrost 12 zusammen mit den darauf befindlichen Filterelementen mittels hydraulischer Hubeinrichtungen 56 gegenüber dem Gehäuseunterteil 54 abgestützt und durch sie heb- und senkbar ist.

Die untere Behälterstirnwand 4 ist bei dieser Ausführungsform der Erfindung im Querschnitt im wesentlichen W-förmig gestaltet und kann, wie in Fig. 9 links dargestellt ist, doppelwandig ausgebildet sein, wie auch die zylindrische Behälterwand 2. Im unteren Behälterraum befindet sich ein Rührer 28, mit dessen Hilfe eine Querströmung in dem Behälter in der Trübe erzeugt werden kann.

Es versteht sich, daß zur leichten Austauschbarkeit der Filterelemente deren Füße 14 mit dem Tragrost 12 leicht lösbar verbunden sein sollten. Wenn die Filterelemente aus einzelnen, in Draufsicht teilkreisförmigen Elementen bestehen, sind deren Innenseiten für den Austausch der Filtertücher ebenfalls leicht zugänglich.

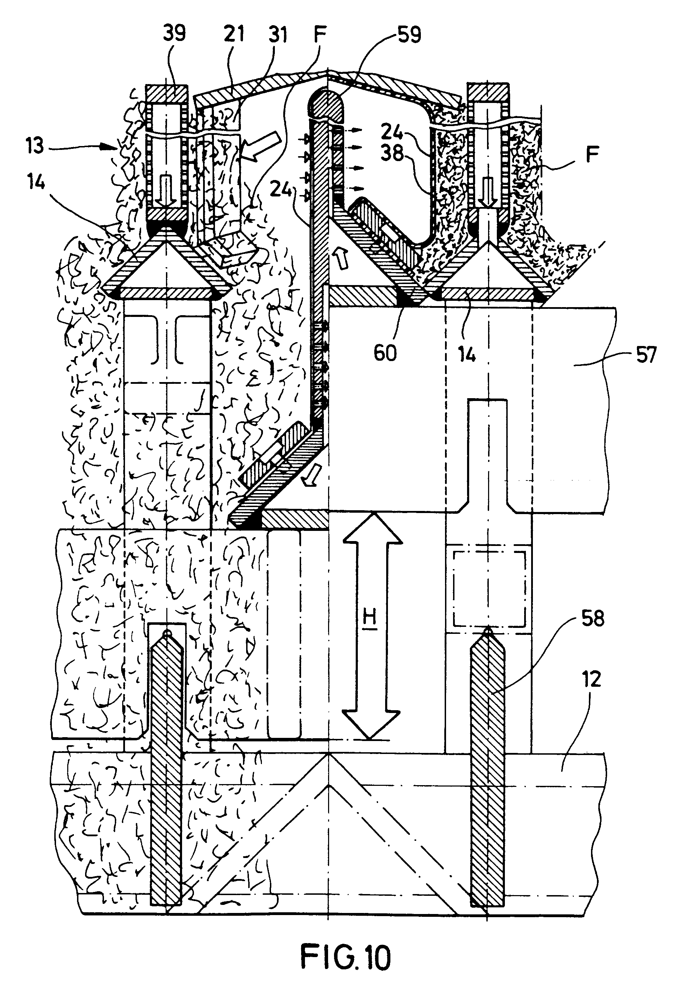

Fig. 10 zeigt eine Ausführungsform der Erfindung, bei der als Rotorelemente nur Abstreifer 31 umlaufen, die an der Querträgeranordung 21 befestigt sind. Die Filterelemente 13 sind auf dem Tragrost 12 befestigt, während sich zwischen benachbarten Filterelementen 13 zylindermantelförmige Preßelemente befinden, die nicht-rotierend von einem Traggitter 57 gehalten sind, das auf Führungseinrichtungen 58 auf dem Tragrost 12 axial verschiebbar geführt ist. In Fig. 10 zeigt die rechte Hälfe das Traggitter 57 mit den darauf befestigten Preßelementen 59 im angehobenen Zustand, in welchem ein an jedem Preßelement ausgebildeter Kopf 60 von unten an den benachbarten Fuß 14 des zugehörigen Filterelements 13 anstößt und auf diese Weise den Trübenraum nach unten abschließt. In Fig. 10 in der linken Hälte ist das Traggitter 57 in der abgesenkten Stellung dargestellt, in der der Filterkuchen F von dem Abstreifer 31 von dem benachbarten Filterelement 13 abgeräumt werden und nach unten durch den Zwischenraum zwischen dem Fuß 14 des Filterelements und dem Kopf 60 des Preßelements 59 fallen kann. Das Preßelement 59 ist beidseitig mit einer Preßmembran 24 bespannt, die in Fig. 10 links im am Preßelement 59 anliegenden Zustand und rechts im gegen den Filterkuchen F fluidisch gedrückten Zustand dargestellt ist. Das Heben um die Distanz H, wie mit dem Doppelpfeil in Fig. 10 dargestellt ist, des Gitterrostes 57 kann mittels hydraulischer Einrichtungen ausgeführt werden. Es versteht sich, daß entsprechende flexible Verbindungseinrichtungen (nicht dargestellt) vorhanden sein müssen, um die von den Preßmembranen 24 umschlossenen Hohlräume um die Preßelemente mit einem Druckfluid versorgen zu können.

Es sei schließlich erwähnt, daß die Behälterstirnwände 3 und 4 zweckmäßigerweise gewölbt sind, weil mit einer solchen Gestaltung bei geringstmöglicher Materialstärke eine größtmögliche Druckfestigkeit des Behälters zu erzielen ist, da dieser, wie bei Filterpressen üblich, zur Beschleunigung des Filtrationsvorganges mit hydraulischem Überdruck der ihm zugeführten Trübe betrieben werden sollte.

## Patentansprüche

1. Filterapparat, bestehend aus
einem im wesentlichen zylindrischen Behälter (1) mit aufrechtstehender Achse und wenigstens einem Einlaß (6) und wenigstens einem Auslaß (7),
mehreren in dem Behälter (1) angeordneten, Filtratkammern enthaltenden Filterelementen (13), die zylindermantelförmige Körper unterschiedlicher Durchmesser sind, die konzentrisch um die Behälterachse (0) angeordnet und von einem sich quer zur Behälterachse (0) erstreckenden Tragrost (12) gehalten sind und die mit wenigstens einem Filtratauslaß (15,16) verbunden sind,
und wenigstens einem Rotor in dem Behälter (1), mit einer in dem Behälter (1) drehbar und ggf. axial verschiebbar gelagerten, sich in der Behälterachse (0) erstreckenden, mit einer Antriebseinrichtung (19) verbundenen, hohlen Rotorwelle (18) und mehreren damit drehfest verbundenen, zylindermantelförmigen Preßelementen (22) unterschiedlicher Durchmesser, die jeweils zwischen zwei benachbarten Filterelementen (13) angeordnet und konzentrisch zur Behälterachse (0) an einer an der Rotorwelle (18) befestigten Querträgeranordnung (21) befestigt sind, die sich auf der dem Tragrost (12) abgewandten Seite der Filterelemente (13) von der Rotorwelle (18) quer erstreckt, und die jeweils aus einem zylindermantelförmigen Trägerkörper (23) und zwei zu beiden Seiten an dessen Randbereichen befestigten, den Trägerkörper (23) überspannenden gummielastischen Preßmembranen (24) bestehen, und die von den Preßmembranen (24) umschlossenen Hohlräume jeweils mit einer Leitung (27) zum Zuführen eines Druckfluides über den Innenraum der Rotorwelle (18) verbunden sind.

2. Filterapparat nach Anspruch 1, dadurch gekennzeichnet, daß wenigstens das untere Ende (46) eines jeden Preßelements (22) und der Tragrost (12) in axialer Richtung relativ zueinander zwischen einer vorgeschobenen Stellung, in der die unteren Enden (Köpfe) (46) der Preßelemente (22) von dem Tragrost (12) abgestützt sind, und einer zurückgezogenen Stellung, in der zwischen den unteren Enden (46) der Preßelemente (22) und dem Tragrost (12) Abstand besteht, verstellbar gelagert sind.

3. Filterapparat nach Anspruch 2, dadurch gekennzeichnet, daß die Rotorwelle (18) mit der daran befestigten Querträgeranordnung (21) und den Preßelementen (22) in axialer Richtung so verstellbar ist, daß die Köpfe (46) der Preßelemente (22) die vorgeschobene und die zurückgezogene Stellung einnehmen können.

4. Filterapparat nach Anspruch 2, dadurch gekennzeichnet, daß jeder Trägerkörper der Preßelemente (22) aus einem an der Querträgeranordnung (21) befestigten Abschnitt (23) und einem an dessen freien Ende in axialer Richtung beweglich geführten ringförmigen Kopf (46) besteht, an dem jeweils das eine Ende der zugehörigen Preßmembranen (24) befestigt ist.

5. Filterapparat nach Anspruch 2, dadurch gekennzeichnet, daß der Tragrost (12) mit den daran befestigten Filterelementen (13) in axialer Richtung verstellbar in dem Behälter (1) gelagert ist.

6. Filterapparat nach einem der vorhergehenden Ansprüche, dadurch gekennzeichnet, daß an der Querträgeranordung (21) beiderseits eines jeden Preßelements (22) Fußringe (44) befestigt sind, an denen die einen axialen Enden der Preßmembranen (24) befestigt sind und die in der vorgeschobenen Stellung der Querträgeranordnung (21) den benachbarten Filterelementen (13) jeweils mit geringem radialem Abstand gegenüberstehen.

7. Filterapparat nach einem der vorhergehenden Ansprüche, dadurch gekennzeichnet, daß die Preßelemente (22) an ihren dem Tragrost (12) zugewandten Ende jeweils mit ringförmig ausgebildeten radial vorstehenden Kopfringen (49) versehen sind, die in der vorgeschobenen Stellung der Preßelemente (22) mit an den Filterelementen (13) am einen Ende derselben ausgebildeten, radial von diesen vorstehenden Füßen (14) in Berührung sind.

8. Filterapparat nach einem der vorhergehenden Ansprüche, dadurch gekennzeichnet, daß auf dem Trägerkörper (23) eines jeden Preßelements (22) wenigstens je eine radial nach innen und wenigstens eine radial nach außen vorstehende, im wesentlichen axial verlaufende steife Rippe (42) angeordnet ist, die jeweils unter den Preßmembranen (24) liegen.

9. Filterapparat nach einem der vorhergehenden Ansprüche, dadurch gekennzeichnet, daß von dem Tragrost (12) wenigstens eine Strebe aus einem Rohr besteht, dessen Innenraum mit den Filtratkammern der Filterelemente (13) verbunden ist.

10. Filterapparat nach einem der vorhergehenden Ansprüche, dadurch gekennzeichnet, daß von der Querträgeranordnung (21) wenigstens ein Element als Hohlelement ausgebildet ist und sein Innenraum mit den von den Preßmembranen (24) umschlossenen Hohlräumen und mit dem Innenraum der hohlen Rotorwelle (18) in fluid-leitender Verbindung steht.

11. Filterapparat nach einem der vorhergehenden Ansprüche, dadurch gekennzeichnet, daß in dem Behälter (1) auf der den Filterelementen (13) abgewandten Seite des Tragrostes (12) ein Rührer (28) angeordnet ist, der mit einer von der Antriebseinrichtung der Rotorwelle (18) unabhängigen Antriebseinrichtung (29) versehen ist.

12. Filterapparat nach einem der vorhergehenden Ansprüche, dadurch gekennzeichnet, daß zwischen den Preßelementen (22) und den diesen gegenüberstehenden Filterelementen (23) in nahem radialem Abstand zu letzteren jeweils wenigstens ein sich axial erstreckendes Abstreifelement (31) angeordnet ist, das an der Querträgeranordnung (21) und an dem fern von der Querträgeranordnung (21) befindlichen Kopf (46) des zugehörigen Preßelements (22) befestigt ist.

13. Filterapparat nach Anspruch 2 und 12, dadurch gekennzeichnet, daß die Abstreifelemente (31) jeweils aus einem an der Querträgeranordnung (21) befestigten Abschnitt (31a) und einem an dem entgegengesetzten Kopf (46) des zugehörigen Preßelements (22) befestigen Abschnitt (31b) bestehen, die aneinander in axialer Richtung relativ zueinander beweglich geführt sind.

14. Filterapparat nach einem der Ansprüche 4 bis 13, dadurch gekennzeichnet, daß die Preßmembranen (24) am einen Ende jeweils zwischen dem Kopf (46) und den Kopfringen (49) der Trägerkörper (23) eingeklemmt sind.

15. Filterapparat nach einem der vorhergehenden Ansprüche, dadurch gekennzeichnet, daß die Filterelemente Filtermittel (38) aufweisen, die mittels elastischer Klemmelemente (41) in Nuten (40) am Filterelement (13) befestigt sind.

16. Filterapparat nach einem der vorhergehenden Ansprüche, dadurch gekennzeichnet, daß die Querträgeranordnung (21) aus mehreren, in gleichen Winkelabständen an der Rotorwelle (18) befestigten Querträgern (21a,21b,21c) besteht.

17. Filterapparat nach einem der vorhergehenden Ansprüche, dadurch gekennzeichnet, daß die Filterelemente (13) jeweils einen hohlen, ringförmigen Fuß (14) aufweisen, der an dem Tragrost (12) befestigt ist.

18. Filterapparat nach einem der vorhergehenden Ansprüche, dadurch gekennzeichnet, daß die untere Gehäusestirnwand (4) im Axialschnitt im wesentlichen die Gestalt eines W aufweist.

19. Filterapparat nach einem der vorhergehenden Ansprüche, dadurch gekennzeichnet, daß der Tragrost (12) an einer in dem Behälter (1) drehbar gelagerten zweiten Welle (61) befestigt ist, die wenigstens in einem Teilabschnitt hohl ist, daß der Tragrost (12) wenigstens eine hohl ausgebildete Strebe (62) aufweist, deren Innenraum mit den Filtratkammern (37) der darauf befestigten Filterelemente (13) und dem Innenraum des hohlen Abschnitts der zweiten Welle (61) verbunden ist, und die zweite Welle (61) unabhängig von der die Querträgeranordnung (21) tragenden Rotorwelle (18) antreibbar ist.

20. Filterapparat nach Anspruch 19, dadurch gekennzeichnet, daß die Rotorwelle (18) die obere Behälterstirnwand (3) und die zweite Welle (61) die untere Behälterstirnwand (4) durchdringen, daß in der unteren Behälterstirnwand (4) eine verschließbare Auslaßöffnung (8) ausgebildet ist und daß an der zweiten Welle (61) unterhalb des Tragrostes (12) ein Rührer (28) befestigt ist, der sich bis dicht an die untere Behälterstirnwand (4) erstreckt.

21. Filterapparat nach einem der Ansprüche 19 und 20, dadurch gekennzeichnet, daß die zweite Welle (61) in der unteren Behälterstirnwand (4) axial verschiebbar gelagert ist.

22. Filterapparat nach einem der Ansprüche 19 bis 21, dadurch gekennzeichnet, daß die Rotorwelle (18) oder die zweite Welle (61) hohl ist, die hohle der Wellen im Innern mit Führungseinrichtungen (63) versehen ist, und die beiden Wellen (18, 61) konzentrisch ineinander geführt sind.

23. Filterapparat nach einem der Ansprüche 1 bis 8, dadurch gekennzeichnet, daß der Tragrost (12) mehrere hohl ausgebildete Streben (62) aufweist, und daß die Filtratkammern (37) unterschiedlicher Filterelemente (13) mit den Innenräumen unterschiedlicher Streben (62) als voneinander getrennte Ableitkanäle für Filtrat verbunden sind.

## Claims

1. A filter apparatus comprising
a substantially cylindrical vessel (1) having an upright axis and having at least one inlet (6) and at least one outlet (7),
a plurality of filter elements (13) disposed in said vessel (1) and comprising filtrate chambers and being formed as cylinder wall-shaped bodies having different diameters and being concentrically arranged about said vessel axis (0) and being supported by a grid-like carrier structure (12) extending within said vessel transversely to the axis (0) thereof and being connected to a filtrate outlet (15,16),
and at least one rotor in the vessel (1), comprising a hollow rotor shaft (18) rotatably and eventually axially displaceably mounted within the vessel (1) and extending in the vessel axis (0) and being connected to drive means (19), and a plurality of cylinder wall-like press elements (22) having different diameters and being fixed for co-rotation with said rotor shaft, said press elements being arranged each between two adjacent filter elements (13) and concentrically with said vessel axis (0) and affixed to a transverse mounting structure (21) mounted to the rotor shaft (18), said transverse mounting structure (21) extending transversely from said rotor shaft (18) at the side of the filter elements (13) opposite to the grid-like carrier structure (12), said press elements comprising each a tubular carrier body (23), and two resilient elastomeric press diaphragms (24) affixed at the edge portions of said carrier body and extending over both sides thereof and defing hollow spaces connected each via the interior space of the rotor shaft (18) with a conduit (27) for the supply of a pressurized fluid.

2. A filter apparatus according to 1, characterized in that at least the lower end (46) of each press element (22) and the grid-like carrier structure (12) are mounted displaceably with respect to each other in axial direction between an advanced position in which the lower ends (heads) (46) of the press elements (22) are resting on said grid-like carrier structure (12), and a retracted position in which a distance exists between said lower ends (46) of the press elements and said grid-like carrier structure (12).

3. A filter apparatus according to claim 2, characterized in that the rotor shaft (18) together with the transverse mounting structure (21) attached thereto and said press elements supported thereon are displaceable in axial direction so as to bring the heads (46) of the press elements into said advanced and retracted positions, respectively.

4. A filter apparatus according to 2, characterized in that the carrier body of each press element (22) is composed of a section (23) secured to said transverse mounting structure (21) and a displaceable annular head (46) guided on a free end of said section and having a respective end of each of the associated press diaphragms (24) sealingly secured thereto.

5. A filter apparatus according to claim 2, characterized in that said grid-like carrier structure (12) with said filter elements (13) secured thereto is mounted in said vessel (1) displaceably in the axial direction.

6. A filter apparatus according to any one of the preceding claims, characterized in that the on either side of each press element (22) foot rings (44) are secured to the transverse mounting structure (21), said foot rings having one of the ends of the diaphragms (24) sealingly secured thereto and being close to the adjacent filter elements (13) in the advanced position of said transverse mounting structure (21)

7. A filter apparatus according to any one of the preceding claims, characterized in that at their ends facing the gridlike carrier structure (12) the press elements (22) are each provided with annular head rings (49) projecting radially from said head portion and adapted to contact radially extending foot portions (14) provided at one end of the filter elements (13) in said advanced position of said press elements.

8. A filter apparatus as set forth in any one of the preceding claims, characterized in that the carrier body (23) of each press element (22) is provided with at least one radially inwardly projecting rib (42) and with at least one radially outwardly projecting rib (42), said ribs (42) being covered by the respective diaphragms (24).

9. A filter apparatus as set forth in any one of the preceding claims, characterized in that said grid-like carrier structure (12) comprises at least one tubular member, the interior of which communicates with the filtrate chambers of said filter elements (13).

10. A filter apparatus as set forth in any one of the preceding claims, characterized in that at least one element of said transverse mounting structure (21) is formed as a hollow member, the interior of which is in fluid-transmitting communication with the hollow spaces enclosed by said diaphragms (24) and with the interior space of said rotor shaft (18).

11. A filter apparatus according to any one of the preceding claims, characterized in that an agitator (28) is disposed within the vessel (1) in a space located on a side of said grid-like carrier structure (12) facing away from said filter elements (13), said agitator (28) being provided with a drive source (29) independent of the drive source of said hollow rotor shaft (18).

12. A filter apparatus according to any one of the preceding claims, characterized in that between each press element (22) and the adjacent filter elements (23) at least one scraper element (31) is disposed extending in the axial direction in close radial proximity to the respective filter elements (23) and secured to the transverse mounting structure (21) and to the head (46) of the respective press element (22).

13. A filter apparatus according to claim 2 and 12, characterized in that each one of said scraper elements (31) is composed of a section (31a) secured to said transverse mounting structure (21) and a section (31b) secured to the head (46) of the associated press element (22), the two sections being guided for displacement relative to one another in the axial direction.

14. A filter press according to any one of claims 4 to 13, characterized in that the press diaphragms (24) each are clamped at each end between a head (46) and a foot ring (49) of the carrier body (23).

15. A filter apparatus according to any one of the preceding claims, characterized in that said filter elements each comprise a filter material (38) secured to the filter element (13) by means of resilient clamping elements (41) received in grooves (40) formed in the filter element (13).

16. A filter apparatus according to any one of the preceding claims, characterized in that said transverse mounting structure (21) is composed of a plurality of transverse arms (21a,21b,21c) secured to said rotor shaft (18) at regular angular spacings.

17. A filter apparatus according to any one of the preceding claims, characterized in that the filter elements (13) each have a hollow annular foot (14) secured to said grid-like carrier structure (12).

18. A filter apparatus according to any one of the preceding claims, characterized in that the vessel has a bottom end wall (4) which is substantially shaped as the letter "W" in axial section.

19. A filter apparatus according to any one of the preceding claims, characterized in that said grid-like carrier structure (12) is secured to a second rotor shaft (61) rotatably mounted in said vessel (1) and being at least in part hollow, said grid-like carrier structure (12) comprising at least one tubular member (62) the interior of which communicates with the filtrate chambers (37) of the filter elements (13) mounted thereon and with the interior of the hollow section of said second rotor shaft (61), said second rotor shaft (61) being drivable independently of the hollow rotor shaft (18) carrying the transverse mounting structure (21).

20. A filter apparatus according to claim 19, characterized in that said first and second rotor shafts (18,61) extend through the top and bottom end walls (3,4) of said vessel (1), respectively, said bottom end wall (4) being formed with a closable discharge opening (8), said second rotor shaft (61) carrying an agitator (28) secured thereto below said grid-like carrier structure (12) and extending in close proximity to said bottom end wall (4).

21. A filter apparatus according any one to claims 19 and 20, characterized in that said second rotor shaft (61) is mounted in said bottom end wall (4) for axial displacement.

22. A filter apparatus according to any one of claims 19 to 22, characterized in that said rotor shafts (18) or said second rotor shaft (61) is hollow, the hollow one of said rotor shafts being provided with guiding means (63) in its interior space, and said shafts (18,61) are concentrically guided one within the other.

23. A filter apparatus according to any one of claims 1 to 8, characterized in that said grid-like carrier structure (12) includes a plurality of tubular elements (62), the filtrate chambers (37) of different filter elements (13) communicating with different ones of said tubular members (62) acting as separate filtrate drain passages.

## Revendications

1. Appareil de filtration, constitué :
- d'une enceinte pratiquement cylindrique (1) à axe vertical et comportant au moins une entrée (6) et au moins une sortie (7),
- de plusieurs éléments de filtration (13) disposés dans l'enceinte (1) et contenant des chambres de filtrat, ces éléments de filtration (13) étant des corps en forme de surface cylindrique et ayant différents diamètres qui sont disposés d'une manière concentrique autour de l'axe (O) de l'enceinte et sont maintenus par une grille porteuse (12) s'étendant perpendiculairement à l'axe (O) de l'enceinte et qui sont reliés à au moins une sortie de filtrat (15,16),
- et d'au moins un rotor disposé dans l'enceinte (1) et comportant, d'une part, un arbre de rotor (18) creux qui est monté de façon à pouvoir tourner et éventuellement se déplacer axialement dans l'enceinte (1) et qui s'étend suivant l'axe (O) de l'enceinte et est relié à un dispositif d'entraînement (19) et, d'autre part, plusieurs éléments exprimeurs (22) en forme de surface cylindrique et ayant des diamètres différents, qui sont solidaires en rotation de l'arbre de rotor (18) et qui, d'une part, sont disposés chacun entre deux éléments de filtration (13) voisins et sont fixés suivant le même axe que l'axe (O) de l'enceinte sur un dispositif de support transversal (21), fixé sur l'arbre de rotor (18) et s'étendant transversalement à partir de cet arbre de rotor (18) sur le côté des éléments de filtration (13) qui est situé à l'opposé de la grille de support (12), et, d'autre part, sont constitués chacun d'un corps porteur (23) en forme de surface cylindrique et de deux membranes exprimeuses (24) à élasticité analogue à celle du caoutchouc qui sont fixées par leurs deux côtés sur les zones marginales du corps porteur (23) et recouvrent l'étendue séparant les extrémités de ce dernier, tandis que les cavités entourées par les membranes exprimeuses (24) sont reliées respectivement à une tuyauterie (27) servant à introduire un fluide sous pression par l'intermédiaire de la cavité de l'arbre de rotor (18).

2. Appareil de filtration suivant la revendication 1, caractérisé en ce qu'au moins l'extrémité inférieure (46) de chaque élément exprimeur (22) et la grille de support (12) sont montées de façon à pouvoir être déplacées l'une par rapport à l'autre selon la direction axiale, entre une position déployée, dans laquelle les extrémités inférieures (têtes) (46) des éléments exprimeurs (22) sont en appui sur la grille de support (12), et une position rétractée dans laquelle une distance existe entre les extrémités inférieures (46) des éléments exprimeurs (22) et la grille de support (12).

3. Appareil de filtration suivant la revendication 2, caractérisé en ce que l'arbre de rotor (18), le dispositif de support transversal (21) qui est fixé sur cet arbre et les éléments exprimeurs (22) sont agencés de façon à pouvoir être déplacés selon la direction axiale, de façon telle que les têtes (46) des éléments exprimeurs (22) puissent occuper la position déployée et la position rétractée.

4. Appareil de filtration suivant la revendication 2, caractérisé en ce que chaque corps porteur des éléments exprimeurs (22) est constitué d'une section (23), fixée sur le dispositif de support transversal (21), et d'une tête (46) de forme annulaire qui est guidée d'une manière mobile en direction axiale à l'extrémité libre de cette section (23) et sur laquelle est fixée l'une des extrémités de chacune des membranes exprimeuses (24) associées.

5. Appareil de filtration suivant la revendication 2, caractérisé en ce que la grille porteuse (12) et les éléments de filtration (13) qui sont fixés sur cette dernière sont montés dans l'enceinte (1) de façon à pouvoir être déplacés selon la direction axiale.

6. Appareil de filtration suivant l'une des revendications précédentes, caractérisé en ce que, sur le dispositif de support transversal (21) et de part et d'autre de chaque élément exprimeur (22), il est fixé des anneaux de pied (44) sur lesquels des premières extrémités axiales des membranes exprimeuses (24) sont fixées et qui, dans la position déployée du dispositif de support transversal (21), font face chacun, à une faible distance radiale, aux éléments de filtration (13) voisins.

7. Appareil de filtration suivant l'une des revendications précédentes, caractérisé en ce qu'à leurs extrémités tournées vers la grille de support (12), les éléments exprimeurs (22) sont pourvus d'anneaux de tête (49) respectifs, de forme annulaire et en saillie radiale, qui, dans la position déployée des éléments exprimeurs (22), viennent au contact de pieds (14) qui sont disposés sur les éléments de filtration (13) à une extrémité de ces éléments et qui font saillie radialement à partir de ces derniers.

8. Appareil de filtration suivant l'une des revendications précédentes, caractérisé en ce que, sur le corps porteur (23) de chaque élément exprimeur (22), il est disposé au moins une nervure rigide (42) faisant saillie radialement vers l'intérieur et au moins une nervure rigide (42) faisant saillie radialement vers l'extérieur, ces nervures (42) s'étendant d'une manière pratiquement axiale et étant situées respectivement sous chacune des membranes exprimeuses (24).

9. Appareil de filtration suivant l'une des revendications précédentes, caractérisé en ce que, dans la grille de support (12), au moins une traverse est constituée d'un tuyau dont la cavité communique avec les chambres de filtrat des éléments de filtration (13).

10. Appareil de filtration suivant l'une des revendications précédentes, caractérisé en ce que, dans le dispositif de support transversal (21), au moins un élément est réalisé sous la forme d'un élément creux dont la cavité communique, d'une manière permettant la transmission des fluides, avec les espaces enveloppés par les membranes exprimeuses (24) et avec la cavité de l'arbre de rotor (18) creux.

11. Appareil de filtration suivant l'une des revendications précédentes, caractérisé en ce que, dans l'enceinte (1) et du côté de la grille de support (12) qui est situé à l'opposé des éléments de filtration (13), il est disposé un agitateur (28) qui est pourvu d'un dispositif d'entraînement (29) indépendant du dispositif d'entraînement de l'arbre de rotor (18).

12. Appareil de filtration suivant l'une des revendications précédentes, caractérisé en ce qu'entre les éléments exprimeurs (22) et les éléments de filtration (23) faisant face à ces éléments exprimeurs, il est chaque fois disposé, à une distance radiale étroite de ces éléments de filtration (23), au moins un élément de raclage (31) s'étendant axialement et fixé sur le dispositif de support transversal (21) et sur la tête (46) de l'élément exprimeur (22) associé qui est située à distance de ce dispositif de support transversal (21).

13. Appareil de filtration suivant l'une des revendications 2 et 12, caractérisé en ce que les éléments de raclage (31) sont constitués chacun d'une section (31 a), fixée sur le dispositif de support transversal (21), et d'une section (31b) fixée sur la tête (46) de l'élément exprimeur (22) associé qui est située à l'extrémité opposée, ces sections (31 a, 31b) étant guidées l'une sur l'autre en direction axiale d'une manière mobile l'une par rapport à l'autre.

14. Appareil de filtration suivant l'une des revendications 4 à 13, caractérisé en ce qu'à l'une de leurs extrémités, les membranes exprimeuses (24) sont serrées respectivement entre la tête (46) et chacun des anneaux de tête (49) du corps porteur (23).

15. Appareil de filtration suivant l'une des revendications précédentes, caractérisé en ce que les éléments de filtration comprennent des moyens de filtration (38) qui sont fixés sur l'élément de filtration (13), dans des gorges (40), au moyen d'éléments élastiques de serrage (41).

16. Appareil de filtration suivant l'une des revendications précédentes, caractérisé en ce que le dispositif de support transversal (21) est constitué de plusieurs poutres (21a, 21b, 21c) fixées suivant des espacements angulaires égaux sur l'arbre de rotor (18).

17. Appareil de filtration suivant l'une des revendications précédentes, caractérisé en ce que les éléments de filtration (13) comprennent chacun un pied annulaire creux (14) qui est fixé sur la grille de support (12).

18. Appareil de filtration suivant l'une des revendications précédentes, caractérisé en ce que la paroi frontale inférieure (4) du boîtier a en coupe axiale pratiquement la forme d'un W.

19. Appareil de filtration suivant l'une des revendications précédentes, caractérisé en ce que la grille de support (12) est fixée sur un second arbre (61) qui est monté rotatif dans l'enceinte (1) et qui est creux au moins dans une section partielle, en ce que la grille de support (12) comprend au moins une traverse (62) creuse dont la cavité communique avec les chambres de filtrat (37) des éléments de filtration (13) fixés sur cette traverse et avec la cavité de la section creuse du second arbre (61), tandis que ce second arbre (61) est agencé de façon à pouvoir être entraîné d'une manière indépendante de l'arbre de rotor (18) portant le dispositif de support transversal (21).

20. Appareil de filtration suivant la revendication 19, caractérisé en ce que l'arbre de rotor (18) traverse la paroi frontale supérieure (3) de l'enceinte et le second arbre (61) traverse la paroi frontale inférieure (4) de l'enceinte, en ce qu'une ouverture de sortie (8) agencée de façon à pouvoir être obturée est disposée dans la paroi frontale inférieure (4) de l'enceinte et en ce que, sur le second arbre (61) et au-dessous de la grille de support (12), il est fixé un agitateur (28) qui s'étend très près de cette paroi frontale inférieure (4) de l'enceinte.

21. Appareil de filtration suivant l'une des revendications 19 et 20, caractérisé en ce que le second arbre (61) est monté de façon à pouvoir être déplacé axialement dans la paroi frontale inférieure (4) de l'enceinte.

22. Appareil de filtration suivant l'une des revendications 19 à 21, caractérisé en ce que l'arbre de rotor (18) ou le second arbre (61) est creux, la cavité située entre les arbres est pourvue intérieurement de moyens de guidage (63) et les deux arbres (18, 61) sont guidés l'un dans l'autre d'une manière coaxiale.

23. Appareil de filtration suivant l'une des revendications 1 à 8, caractérisé en ce que la grille de support (12) comprend plusieurs traverses (62) creuses et en ce que les chambres de filtrat (37) des différents éléments de filtration (13) communiquent avec les cavités de différentes traverses (62) en constituant des conduits d'évacuation de filtrat séparés les uns des autres.
